Europäisches Patentamt

European Patent Office

Office européen des brevets

(19)

(11) **EP 1 320 200 B1**

(12) **EUROPÄISCHE PATENTSCHRIFT**

(45) Veröffentlichungstag und Bekanntmachung des Hinweises auf die Patenterteilung:
**13.07.2005  Patentblatt 2005/28**

(51) Int Cl.⁷: **H04B 7/06**, H04B 7/08, H04L 25/03, H04B 1/707

(21) Anmeldenummer: **02027912.1**

(22) Anmeldetag: **16.10.1999**

(54) **Verfahren für die Übertragung von Signalen zwischen einer ersten und zweiten Funkstation und Funkstation**

Method for transmitting signals between a first and second radio station and radio station

Procédé de transmission de signaux entre une premiere et deuxième station radio et station radio

(84) Benannte Vertragsstaaten:
**AT DE FR GB IT**

(30) Priorität: **30.10.1998  DE 19850279**

(43) Veröffentlichungstag der Anmeldung:
**18.06.2003  Patentblatt 2003/25**

(62) Dokumentnummer(n) der früheren Anmeldung(en) nach Art. 76 EPÜ:
**99960784.9 / 1 125 376**

(73) Patentinhaber: **ROBERT BOSCH GMBH**
**70442 Stuttgart (DE)**

(72) Erfinder: **Kowalewski, Frank**
**38228 Salzgitter (DE)**

(56) Entgegenhaltungen:
EP-A- 0 776 101    EP-A- 1 074 129
GB-A- 2 313 261

- **RAPAJIC P B ET AL: "LINEAR ADAPTIVE TRANSMITTER-RECEIVER STRUCTURES FOR ASYNCHRONOUS CDMA SYSTEMS" EUROPEAN TRANSACTIONS ON TELECOMMUNICATIONS AND RELATED TECHNOLOGIES, AEI, MILANO, IT, Bd. 6, Nr. 1, 1995, Seiten 21-27, XP000502746 ISSN: 1120-3862**

**Beschreibung**

Stand der Technik

Die Erfindung geht von einem Verfahren für die Übertragung von Signalen zwischen einer ersten Funkstation und einer zweiten Funkstation und von Funkstationen nach der Gattung der unabhängigen Ansprüche aus.

Aus der Deutschen Patentanmeldung mit dem Aktenzeichen 198 18 215 ist bereits ein Verfahren für die Übertragung von Signalen zwischen einer Basisstation und mehreren Mobilstationen über Funkkanäle bekannt, wobei die Daten unterschiedlicher Mobilstationen mit unterschiedlichen Codes gespreizt werden. In einem Modulator wird eine Vorentzerrung der zu übertragenden Signale vorgenommen.

Werden vorentzerrte Datensignale über einen Mehrwege-Übertragungskanal an einen Empfänger versendet, so können durch starke Fading-Einbrüche Übertragungsfehler auftreten. Unter Fading versteht man dabei Amplitudenschwankungen, die beim Mehrwegeempfang eines übertragenen Signals auftreten können.

Die Europaïsche Patentanmeldung EP-A-0 776 101 offenbart die Vorentzerrung von Sende Signalen in abhängigkeit von Übertragungseigenschaften mehrerer Funkkanäle.

Vorteile der Erfindung

Das erfindungsgemäße Verfahren und die erfindungsgemäßen Funkstationen mit den Merkmalen der unabhängigen Ansprüche haben demgegenüber den Vorteil, daß die vorentzerrten Signale über mehrere Funkkanäle von einer Sendevorrichtung der ersten Funkstation an eine Empfangsvorrichtung der zweiten Funkstation übertragen werden.

Auf diese Weise wird gewährleistet, daß an der zweiten Funkstation der Empfang von vorentzerrten Signalen ohne wesentlichen Amplitudeneinbruch erfolgt.

Durch die in den Unteransprüchen aufgeführten Maßnahmen sind vorteilhafte Weiterbildungen und Verbesserungen des Verfahrens und der Funkstationen gemäß den unabhängigen Ansprüchen möglich.

Besonders vorteilhaft ist es, daß von mehreren Antennen der Sendevorrichtung der ersten Funkstation jeweils ein vorentzerrtes Signal abgestrahlt und über je einen Funkkanal an die Empfangsvorrichtung der zweiten Funkstation übertragen wird, wobei für jeden Funkkanal eine Schätzung einer Impulsantwort in der ersten Funkstation ermittelt wird und wobei eine Vorentzerrung des von der jeweiligen Antenne abzustrahlenden Signals in Abhängigkeit der Schätzung der Impulsantwort des zugehörigen Funkkanals vorgenommen wird. Auf diese Weise wird gewährleistet, daß die Übertragung von Signalen zwischen der ersten Funkstation und der zweiten Funkstation über mehrere Funkkanäle bei der Vorentzerrung berücksichtigt wird. Somit kann auch bei einer Übertragung über mehrere Funkkanäle auf eine Entzerrung der empfangenen Signale in der zweiten Funkstation verzichtet werden, so daß Aufwand in der zweiten Funkstation eingespart wird.

Eine genaue Schätzung der Impulsantwort des zugehörigen Funkkanals ergibt sich, wenn von einer Antenne der zweiten Funkstation ein Referenzsignal über die Funkkanäle an die erste Funkstation übertragen wird und die Schätzung der Impulsantwort des jeweiligen Funkkanals aus einem Empfang des Referenzsignals über den jeweiligen Funkkanal in der ersten Funkstation abgeleitet wird.

Eine Entzerrung für einen mehrkanaligen Empfang von Signalen der ersten Funkstation in der zweiten Funkstation ist auch dann nicht erforderlich, wenn gemäß einer zweiten Ausführungsform ein von der Sendevorrichtung der ersten Funkstation abgestrahltes vorentzerrtes Signal über je einen Funkkanal von mehreren Antennen der Empfangsvorrichtung der zweiten Funkstation empfangen wird, wobei in der ersten Funkstation eine Schätzung einer Gesamtimpulsantwort aller Funkkanäle ermittelt wird und wobei eine Vorentzerrung des von der ersten Funkstation abzustrahlenden Signals in Abhängigkeit der Schätzung der Gesamtimpulsantwort vorgenommen wird. Auch auf diese Weise wird für die Vorentzerrung des von der ersten Funkstation abzustrahlenden Signals die mehrkanalige Übertragung zwischen der ersten Funkstation und der zweiten Funkstation berücksichtigt.

Eine genaue Schätzung der Gesamtimpulsantwort ist dabei durch Übertragung jeweils eines Referenzsignals über den zugehörigen Funkkanal von den Antennen der zweiten Funkstation an die erste Funkstation möglich, wobei die Schätzung der Gesamtimpulsantwort aus einem überlagerten Empfang der Referenzsignale in der ersten Funkstation abgeleitet wird. Von der ersten Funkstation an die zweite Funkstation übertragene vorentzerrte Signale brauchen dann in der zweiten Funkstation lediglich linear kombiniert zu werden und können ohne Entzerrung anschließend einer Demodulation zugeführt werden. Auch auf diese Weise wird Aufwand in der zweiten Funkstation eingespart.

Besonders vorteilhaft ist es, daß jedes Referenzsignal in Abhängigkeit des für seine Übertragung verwendeten Funkkanals mit einem Koeffizienten multipliziert wird und daß bei der linearen Kombination der von den Antennen der Empfangsvorrichtung gebildeten Empfangssignale jedes Empfangssignal mit dem Koeffizienten des für seine Übertragung verwendeten Funkkanals multipliziert wird. Durch geeignete Wahl der Koeffizienten läßt sich dabei eine Richtcharakteristik der Antennen der zweiten Funkstation in Richtung zur ersten Funkstation realisieren, so daß eine Übertragung von Signalen zwischen der ersten Funkstation und der zweiten Funkstation auch weniger Sendeleistung erfordert.

Ein weiterer Vorteil besteht darin, daß zwischen der ersten Funkstation oder der zweiten Funkstation und weiteren Funkstationen über weitere Funkkanäle Signale übertragen werden, wobei die mit den Signalen übertragenen Daten unterschiedlicher Funkstationen mit unterschiedlichen Codes gespreizt werden, und daß die Vorentzerrung im Modulator der ersten Funkstation in Abhängigkeit aller unterschiedlicher Codes und der Übertragungseigenschaften aller Funkkanäle vorgenommen wird. Auf diese Weise läßt sich die Vorentzerrung weiter verbessern, so daß auch sogenannte Inter-Symbol-Interferenzen (ISI) zwischen übertragenen Datensymbolen einer Funkstation und Multiple-Access-Interferenzen (MAI), d. h. Störungen durch andere Funkstationen, bei der Vorentzerrung berücksichtigt werden, so daß auch solche Störungen keine Entzerrung in der zweiten Funkstation erfordern.

Zeichnung

Ausführungsbeispiele der Erfindung sind in der Zeichnung dargestellt und in der nachfolgenden Beschreibung näher erläutert. Es zeigen Figur 1 den allgemeinen Aufbau eines Mobilfunksystems bzw. eines Mobiltelefonsystems, Figur 2 ein Blockschaltbild einer ersten Ausführungsform für eine erste und eine zweite Funkstation, Figur 3 eine zweite Ausführungsform für die erste und die zweite Funkstation und Figur 4 einen zeitlichen Ablaufplan des erfindungsgemäßen Verfahrens.

Beschreibung der Ausführungsbeispiele

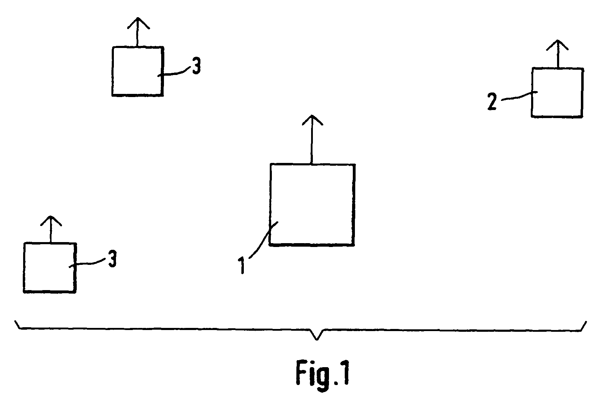

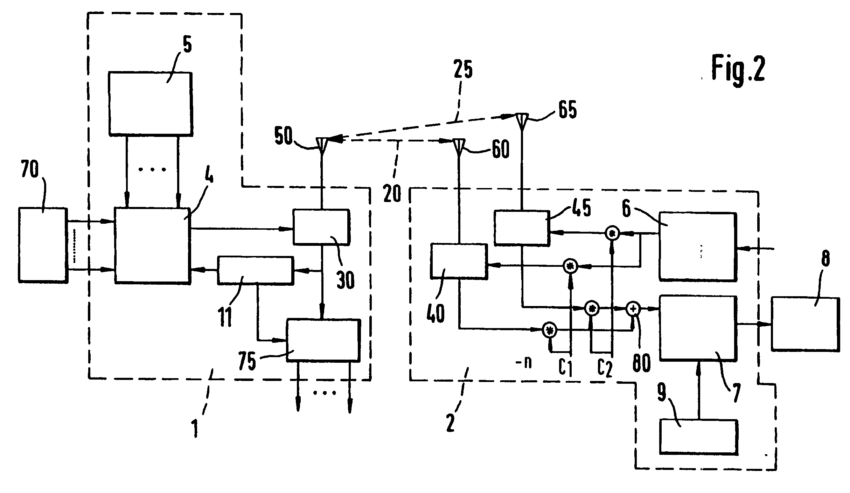

In der Figur 1 wird schematisch eine Funkzelle eines zellularen Mobiltelefonsystems bzw. Mobilfunksystems mit einer als Basisstation ausgebildeten ersten Funkstation 1, einer als Mobilstation ausgebildeten zweiten Funkstation 2 sowie weiteren ebenfalls als Mobilstationen ausgebildeten Funkstationen 3 dargestellt. Wesentlich an diesem System ist, daß ein Austausch von Daten immer nur zwischen der Basisstation 1 und den Mobilstationen 2, 3 erfolgt und kein direkter Datenaustausch zwischen den Mobilstationen 2, 3 möglich ist. Entsprechend werden die Basisstation 1 auch als Zentralstation und die Mobilstationen 2, 3 als Peripheriestationen bezeichnet. Der Austausch von Daten zwischen der Basisstation 1 und den Mobilstationen 2, 3 erfolgt durch Funkübertragung. Die Funkübertragung von der Basisstation 1 zu einer der Mobilstationen 2, 3 wird dabei als Downlink und die Datenübertragung von einer der Mobilstationen 2, 3 zur Basisstation 1 als Uplink bezeichnet. Bei einem derartigen, in der Figur 1 dargestellten System, mit einer Zentral- oder Basisstation 1 und mehreren Peripherie- oder Mobilstationen 2, 3 ist festzulegen, wie die Daten für die verschiedenen Mobilstationen 2, 3 moduliert werden, damit sie in den Empfängern der verschiedenen Mobilstationen 2, 3 getrennt detektiert werden können. Bei dem System nach Figur 1 handelt es sich um ein sogenanntes CDMA-System (Code Division Multiple Access), bei dem für die Datenübertragung ein gemeinsames Frequenzband zur Verfügung steht, wobei sich die einzelnen Funkkanäle zwischen der Basisstation 1 und den jeweiligen Mobilstationen 2, 3 hinsichtlich eines Codes unterscheiden, mit dem das Signal für die entsprechende Mobilstation 2, 3 gespreizt wird. Eine solche Codierung ist jedoch nicht erforderlich, wenn neben der Basisstation 1 nur eine einzige Mobilstation 2, 3 in der Funkzelle vorhanden ist. Im folgenden wird der Fall beschrieben, in dem mehrere Mobilstationen 2, 3 neben der Basisstation 1 in der Funkzelle vorgesehen sind. Durch die Spreizung mit dem Code wird dabei jedes Signal, das zwischen der Basisstation 1 und einer bestimmten Mobilstation 2, 3 ausgetauscht werden soll, über das gesamte zur Verfügung stehende Spektrum verteilt. Jedes einzelne zu übertragende Informationsbit wird dabei in eine Vielzahl kleiner "Chips" zerlegt. Dadurch wird die Energie eines Bits über das gesamte Frequenzspektrum verteilt, welches dem CDMA-System zur Verfügung steht. In Figur 2 wird ein CDMA-System anhand einer Downlink-Übertragung näher erläutert. Die Figur 2 zeigt wiederum die als Basisstation ausgebildete erste Funkstation 1 und die als Mobilstation ausgebildete zweite Funkstation 2. Die Basisstation 1 umfaßt dabei eine erste Antenne 50. Die zweite Funkstation 2 umfaßt eine dritte Antenne 60 und eine vierte Antenne 65. Die erste Funkstation 1 und die zweite Funkstation 2 tauschen somit Daten über einen ersten Funkkanal 20 und einen zweiten Funkkanal 25 aus. Der erste Funkkanal 20 beschreibt dabei eine Übertragungsstrecke zwischen der ersten Antenne 50 und der dritten Antenne 60. Der zweite Funkkanal 25 beschreibt eine Übertragungsstrecke zwischen der ersten Antenne 50 und der vierten Antenne 65. Die erste Funkstation 1 umfaßt einen ersten Modulator 4, der die Datenströme von Datenquellen 70 für die Übertragung über den ersten Funkkanal 20 und den zweiten Funkkanal 25 aufbereitet. Dazu benötigt der erste Modulator 4 noch Codeinformationen, die von einem Codegenerator 5 zur Verfügung gestellt werden. Exemplarisch werden in der Figur 2 zwei Pfeile von den Datenquellen 70 zum ersten Modulator 4 und zwei Pfeile vom Codegenerator 5 zum ersten Modulator 4 gezeigt, die zwei unterschiedliche Datenströme bzw. zwei unterschiedliche Codeinformationen repräsentieren. In einem realen System wird eine wesentlich größere Anzahl von Datenströmen und Codeinformationen gleichzeitig verarbeitet. Der erste Modulator 4 erzeugt aus den Datenströmen und den Codeinformationen ein Sendesignal, welches der zweiten Funkstation 2 und den weiteren Funkstationen 3 zugesendet wird. In Figur 2 wird exemplarisch nur die zweite Funkstation 2 als empfangende Mobilstation dargestellt. Wäre nur die zweite Funkstation 2 als empfangende Mobilstation in der Funkzelle zur Versorgung mit einem einzigen Datenstrom vorgesehen, so würde in der ersten Funkstation 1 nur eine Codeinformation benötigt. Die erste Funkstation 1 sendet jedoch in der Regel gleichzeitig über entsprechende Funkkanäle auch zu den weiteren Funkstationen 3, deren jeweilige Daten ebenfalls mit verschiedenen Codes moduliert sind. Die weiteren Funkstationen 3 werden aus Vereinfachungsgründen in Figur 2 nicht dargestellt.

Der Codegenerator 5 erzeugt Codes in Abhängigkeit von gewählten Funkverbindungen zu den Mobilstationen 2, 3. Die mit den Signalen zu übertragenden Daten werden im ersten Modulator 4 mit diesen Codes gespreizt.

Bei der Übertragung zwischen der ersten Funkstation 1 und der zweiten Funkstation 2 treten nun eine Vielzahl von Störungen auf. Eine erste Störung wird dabei als ISI (Intersymbolinterferenz) bezeichnet und resultiert daher, daß ein ausgesandtes Funksignal über mehrere verschiedene Pfade zum Empfänger gelangen kann, wobei sich die Ankunftszeiten beim Empfänger geringfügig unterscheiden. Es handelt sich somit um eine Störung, die in dem betreffenden Funkkanal dadurch entsteht, daß zeitlich vorhergehend ausgesandte Signale aktuell empfangene Signale stören (daher: Inter-Symbol-Interferenz). Eine weitere Störung erfolgt dadurch, daß mehrere Datenströme gleichzeitig übertragen werden, die sich nur hinsichtlich des Codes unterscheiden. Diese Störung tritt auf, wenn die Basisstation 1 mit mehreren Mobilstationen 2, 3 gleichzeitig in Funkkontakt steht, was bei modernen Mobiltelefonsystemen den Regelfall darstellt. Es handelt sich somit um eine Störung, die von den Signalen unterschiedlicher Benutzer ausgeht und die daher auch als MAI (multiple access interference) bezeichnet wird.

Figur 2 zeigt auch den Empfangsteil der als Mobilstation ausgebildeten zweiten Funkstation 2, die zum Empfang von Downlink-Daten über den ersten Funkkanal 20 und den zweiten Funkkanal 25 bestimmt ist. Dafür ist ein erster Demodulator 7 vorgesehen, der die über die dritte Antenne 60 und die vierte Antenne 65 empfangenen Funksignale verarbeitet. Der erste Demodulator 7 verarbeitet die empfangenen Signale, um daraus einen Datenstrom für einen Datennutzer 8 zu erzeugen. Wenn die übertragenen Daten z. B. Sprachinformationen darstellen, handelt es sich bei dem Datennutzer 8 um einen Sprachdecoder, bei anderen Daten beispielsweise um einen Rechner oder um ein Fax-Gerät. In der Regel weisen Mobilstationen nur einen einzigen Datennutzer 8 und somit auch nur einen einzigen Datenstrom auf. Bei völlig ungestörter Übertragung über den ersten Funkkanal 20 und den zweiten Funkkanal 25 bräuchte der erste Demodulator 7 zur Demodulation nur die Codeinformation der zu detektierenden Daten für den Datennutzer 8 zu kennen. Aufgrund der oben beschriebenen Störungen ist dies jedoch nicht ausreichend. Daher ist in der Basisstation 1 zusätzlich noch ein erster Kanalschätzer 11 vorgesehen, der Informationen über die Übertragungseigenschaften aller Funkkanäle zwischen der Basisstation 1 und den Mobilstationen 2, 3 zur Verfügung stellt. Der erste Modulator 4 erzeugt dabei ein Sendesignal, welches sowohl die ISI als auch die MAI berücksichtigt. Dabei ist das Sendesignal jeweils so ausgelegt, daß jede der Mobilstationen 2, 3 beim Empfang, soweit dies möglich ist, ein störungsfreies Signal erhält. Dabei werden sowohl die Störungen, die durch die gleichzeitige Verwendung mehrerer Codes entstehen, als auch die Störungen, die durch die Übertragungseigenschaften der einzelnen Funkkanäle entstehen, berücksichtigt.

Entsprechend einfach ist dann in Figur 2 der Empfänger der Daten, d. h. die zweite Funkstation 2 aufgebaut. Diese weist den ersten Demodulator 7 auf, der das Signal der dritten Antenne 60 und der vierten Antenne 65 erhält. Diesem ersten Demodulator 7 muß noch die Codeinformation für den betreffenden Datenstrom von einem weiteren Codegenerator 9 zur Verfügung gestellt werden, woraus dann der erste Demodulator 7 den Datenstrom für den Datennutzer 8 erzeugt. Die zweite Funkstation 2 läßt sich somit besonders einfach aufbauen.

In Figur 2 wurde dargestellt, daß bei der Downlink-Übertragung vorteilhafterweise alle Störungen der Funkkanäle 20, 25 in der sendenden Station, bei Downlink-Übertragung also in der Basisstation 1, berücksichtigt werden. Der Downlink-Teil der zweiten Funkstation 2 und der weiteren Funkstationen 3 kann daher besonders einfach aufgebaut sein. Um diese Mobilstationen 2, 3 auch für den Uplink-Pfad, d. h. für das Senden von Daten von der jeweiligen Mobilstation 2, 3 zur Basisstation 1 einfach zu halten, könnte für diese Übertragung ein Verfahren gemäß dem Artikel von A. Klein, G. K. Kaleh und P.W. Beier: "Zero forcing and minimum mean - square - error equalization for multi user detection in code - division - multiple - access channels" IEEE Trans. Vehic. Tech. Bd. 45 (1996), S. 276 - 287 verwendet werden, bei dem die Berücksichtigung der ISI und der MAI in der empfangenden Station, d. h. wieder in der Basisstation 1 erfolgt. Dazu wäre dann der erste Kanalschätzer 11 zusätzlich mit dem zweiten Demodulator 75 verbunden. Es wird auf diese Weise ein System möglich, bei dem die Mobilstationen 2, 3 besonders einfach aufgebaut sind, da die Berücksichtigung von ISI und MAI ausschließlich in der Basisstation 1 erfolgt. In einem entsprechenden TDD-System (Time Division Duplex), bei dem die Downlink-Übertragung und die Uplink-Übertragung in benachbarten Slots im gleichen Frequenzband stattfindet, ist es auch sehr einfach möglich, die Kanalübertragungseigenschaften durch den ersten Kanalschätzer 11 in der Basisstation 1 zu erhalten, indem die Eigenschaften der jeweiligen Übertragungskanäle durch Auswertung der empfangenen Uplink-Daten in der Basisstation 1 ermittelt werden können. Weiterhin kann die entsprechende Kanalimpulsantwort bzw. Kanalqualität auch durch ein Datentelegramm von der entsprechenden Mobilstation 2, 3 an die Basisstation 1 übermittelt werden.

Wird für die Übertragung von der ersten Funkstation 1 zur zweiten Funkstation 2 nur ein einziger Funkkanal verwendet, so kann es trotz der Vorentzerrung des zu übertragenden Signals in der ersten Funkstation 1 zu Amplitudeneinbrüchen des entsprechenden Empfangssignals bei der zweiten Funkstation 2 kommen. Die auch als Fading bezeichneten Amplitudenschwankungen des in der zweiten Funkstation 2 empfangenen Signals resultieren dabei aus Mehrwegeempfang oder Funkabschattungen bei Bewegung der als Mobilstation ausgebildeten zweiten Funkstation 2 beispielsweise in der Nähe von Gebäuden. Um den Amplitudenschwankungen aufgrund von Mehrwegeempfang vorzubeugen, erfolgt die Übertragung zwischen der ersten Funkstation 1 und der zweiten Funkstation 2 über die zwei Funkkanäle 20, 25. Dies wird im folgenden anhand von Figur 2 näher erläutert. Der erste Funkkanal 20 bildet dabei eine Übertragungsstrecke zwischen der ersten Antenne 50 und der dritten Antenne 60 und der zweite Funkkanal 25 bildet eine Übertragungsstrecke zwischen der ersten Antenne 50 und der vierten Antenne 65. Tritt auf einer der beiden Übertragungsstrecken ein Amplitudeneinbruch des auf dieser Übertragungsstrecke übertragenen Signals ein, so kann das Signal noch über die andere der beiden Übertragungsstrecken mit ausreichender Amplitude in der zweiten Funkstation 2 empfangen werden.

Die erste Funkstation 1 umfaßt weiterhin eine erste Sende-/Empfangsvorrichtung 30, die einen Antennenschalter und gegebenenfalls Sende-/Empfangsverstärker umfaßt, und einen zweiten Demodulator 75. Die erste Antenne 50 ist eine Sende-/Empfangsantenne, so daß der Antennenschalter in der ersten Sende-/Empfangsvorrichtung 30 zur Umschaltung zwischen Sende- und Empfangsrichtung dient. In der Senderichtung verbindet der Antennenschalter der ersten Sende-/Empfangsvorrichtung 30 den ersten Modulator 4 mit der ersten Antenne 50. In der Empfangsrichtung verbindet der Antennenschalter der ersten Sende-/Empfangsvorrichtung 30 die erste Antenne 50 mit dem zweiten Demodulator 75, der empfangene Signale demoduliert und an eine oder mehrere Datensenken weiterleitet. Die dem zweiten Demodulator 75 zugeführten empfangenen Signale werden außerdem dem ersten Kanalschätzer 11 zugeführt, der eine Schätzung einer Gesamtimpulsantwort der beiden Funkkanäle 20, 25 zwischen der ersten Funkstation 1 und der zweiten Funkstation 2 ermittelt und diese Schätzung an den ersten Modulator 4 weiterleitet. Die Vorentzerrung des von der ersten Antenne 50 der ersten Funkstation 1 abzustrahlenden Signals wird dann im ersten Modulator 4 in Abhängigkeit der Schätzung der Gesamtimpulsantwort vorgenommen. In der zweiten Funkstation 2 ist die dritte Antenne 60 mit einer dritten Sende-/Empfangsvorrichtung 40 und die vierte Antenne 65 mit einer vierten Sende-/Empfangsvorrichtung 45 verbunden. Die dritte Antenne 60 und die vierte Antenne 65 sind dabei ebenfalls jeweils als Sende-/Empfangsantenne ausgebildet, so daß in der dritten Sende-/Empfangsvorrichtung 40 und in der vierten Sende-/Empfangsvorrichtung 45 jeweils ein Antennenschalter vorgesehen ist, um zwischen den beiden Übertragungsrichtungen umschalten zu können. Die zweite Funkstation 2 umfaßt einen zweiten Modulator 6, der im Sendefall über den jeweiligen Antennenschalter der dritten Sende-/Empfangsvorrichtung 40 und der vierten Sende-/Empfangsvorrichtung 45 sowohl mit der dritten Antenne 60 als auch mit der vierten Antenne 65 verbunden wird. Im Empfangsfall verbindet der jeweilige Antennenschalter der dritten Sende-/Empfangsvorrichtung 40 und der vierten Sende-/Empfangsvorrichtung 45 die dritte Antenne 60 und die vierte Antenne 65 über ein Summationsglied 80 mit dem ersten Demodulator 7. Vor der Summation der beiden Empfangssignale durch das Summationsglied 80 wird das von der dritten Sende-/Empfangsvorrichtung 40 gelieferte Empfangssignal mit einem ersten Koeffizienten $c_1$ und das von der vierten Sende-/Empfangsvorrichtung 45 gelieferte Empfangssignal mit einem zweiten Koeffizienten $c_2$ multipliziert. Umgekehrt werden im Sendefall dem zweiten Modulator 6 zugeführte Sendedaten nach ihrer Modulation im zweiten Modulator 6 einerseits mit dem ersten Koeffizienten $c_1$ multipliziert und über die dritte Sende-/Empfangsvorrichtung 40 der dritten Antenne 60 zugeführt und andererseits mit dem zweiten Koeffizienten $c_2$ multipliziert und über die vierte Sende-/Empfangsvorrichtung 45 der vierten Antenne 65 zugeführt.

Durch entsprechende Wahl der Koeffizienten $c_1$, $c_2$ läßt sich eine Richtwirkung oder Richtcharakteristik der von der dritten Antenne 60 und der vierten Antenne 65 abzustrahlenden bzw. zu empfangenden Signale realisieren, die vorteilhafterweise auf die erste Funkstation 1 ausgerichtet ist. Auch auf diese Weise kann Signaleinbrüchen durch Fading entgegengewirkt werden. Über das Summationsglied 80 werden die von der dritten Antenne 60 und der vierten Antenne 65 gelieferten Empfangssignale linear kombiniert und anschließend der Demodulation im ersten Demodulator 7 zugeführt. Der erste Koeffizient $c_1$ ist dabei dem ersten Funkkanal 20 und der zweite Koeffizient $c_2$ dem zweiten Funkkanal 25 zugeordnet. Im zweiten Modulator 6 können Referenzsignale gebildet werden, die nach Multiplikation mit dem ersten Koeffizienten $c_1$ bzw. mit dem zweiten Koeffizienten $c_2$ über den zugehörigen Funkkanal 20, 25 an die erste Funkstation 1 übertragen werden. Die Schätzung der Gesamtimpulsantwort im ersten Kanalschätzer 11 wird dabei aus dem überlagerten Empfang der Referenzsignale in der Basisstation 1 abgeleitet.

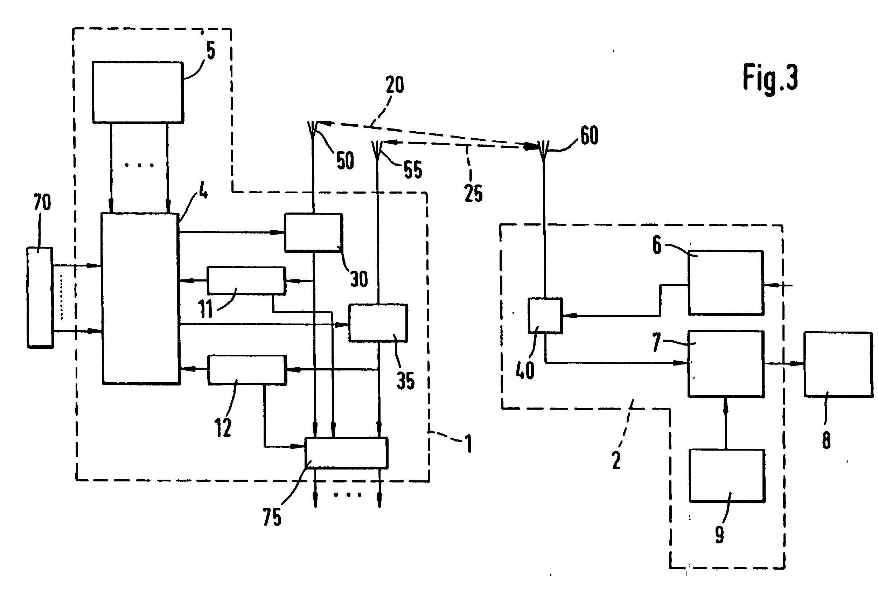

In Figur 3 kennzeichnen gleiche Bezugszeichen gleiche Elemente wie in Figur 2. Im Unterschied zu Figur 2 umfaßt nun die erste Funkstation 1 neben der ersten Antenne 50 auch eine zweite Antenne 55, wohingegen die zweite Funkstation 2 nur die dritte Antenne 60 umfaßt. Der erste Funkkanal 20 charakterisiert in Figur 3 nun die Übertragungsstrecke zwischen der ersten Antenne 50 und der dritten Antenne 60 und der zweite Funkkanal 25 charakterisiert die Übertragungsstrecke zwischen der zweiten Antenne 55 und der dritten Antenne 60. Somit ist gemäß Figur 3 in der zweiten Funkstation 2 nur die dritte Sende-/Empfangsvorrichtung 40 erforderlich, die wiederum für die beiden möglichen Übertragungsrichtungen einen Antennenschalter umfaßt, der einerseits den zweiten Modulator 6 mit der dritten Antenne 60 und andererseits den ersten Demodulator 7 mit der dritten Antenne 60 in Abhängigkeit der Übertragungsrichtung verbindet. Die erste Funkstation 1 hingegen umfaßt nun neben der ersten Sende-/Empfangsvorrichtung 30 eine zweite Sende-/Empfangsvorrichtung 35, die ebenfalls einen Antennenschalter umfaßt, der die zweite Antenne 55 zum Senden mit dem ersten Modulator 4 und zum Empfangen mit dem zweiten Demodulator 75 und über einen zweiten Kanalschätzer 12 wiederum mit dem ersten Modulator 4 verbindet. Der zweite Kanalschätzer 12 kann zusätzlich wie in Figur 3 dargestellt ebenfalls mit dem zweiten Demodulator 75 verbunden sein, um ISI und MAI von empfangenen Signalen zu eliminieren.

Auf diese Weise wird von der ersten Antenne 50 und von der zweiten Antenne 55 jeweils ein vorentzerrtes Signal abgestrahlt und über den ersten Funkkanal 20 bzw. über den zweiten Funkkanal 25 an die dritte Sende-/Empfangsvorrichtung 40 übertragen, wobei für den ersten Funkkanal 20 eine Schätzung seiner Impulsantwort im ersten Kanalschätzer 11 und für den zweiten Funkkanal 25 eine Schätzung seiner Impulsantwort im zweiten Kanalschätzer 12 ermittelt wird. Die Vorentzerrung des von der ersten Antenne 50 abzustrahlenden Signals wird dann in Abhängigkeit der Schätzung der Impulsantwort des ersten Funkkanals 20 und der Schätzung der Impulsantwort des zweiten Funkkanals 25 im ersten Modulator 4 vorgenommen und die Vorentzerrung des von der zweiten Antenne 55 abzustrahlenden Signals wird in Abhängigkeit der Schätzung der Impulsantwort des ersten Funkkanals 20 und der Schätzung der Impulsantwort des zweiten Funkkanals 25 im ersten Modulator 4 vorgenommen. Dabei wird von der dritten Antenne 60 der zweiten Funkstation 2 ein Referenzsignal über die beiden Funkkanäle 20, 25 und die erste Antenne 50 und die zweite Antenne 55 an die erste Funkstation 1 übertragen. Die Schätzung der Impulsantwort des ersten Funkkanals 20 wird dann aus dem Empfang des Referenzsignals über den ersten Funkkanal 20 im ersten Kanalschätzer 11 abgeleitet und die Schätzung der Impulsantwort des zweiten Funkkanals 25 wird aus dem Empfang des Referenzsignals über den zweiten Funkkanal 25 im zweiten Kanalschätzer 12 abgeleitet.

Die Vorentzerrung des von der ersten Antenne 50 und von der zweiten Antenne 55 abzustrahlenden Signals erfolgt in Abhängigkeit aller in der Funkzelle der ersten Funkstation 1 aktuell verwendeten Codes und der Übertragungseigenschaften aller dort aktuell verwendeten Funkkanäle, die in den beiden Kanalschätzern 11, 12 ermittelt werden. Dies gilt auch für das Ausführungsbeispiel gemäß Figur 2 unter Verwendung nur der ersten Antenne 50 für die Abstrahlung von Signalen von der ersten Funkstation 1 und unter Verwendung nur des ersten Kanalschätzers 11.

Es kann auch vorgesehen sein, sowohl die erste Funkstation 1 als auch die zweite Funkstation 2 mit jeweils zwei Antennen auszustatten, so daß sich vier Funkkanäle ergeben, die einen noch besseren Schutz gegen Fading ermöglichen. In der ersten Funkstation 1 und in der zweiten Funkstation 2 können auch beliebig mehr Antennen verwendet werden, so daß eine beliebige Anzahl von Funkkanälen zwischen der ersten Funkstation 1 und der zweiten Funkstation 2 eingerichtet werden kann, wobei mit zunehmender Anzahl von Funkkanälen zwischen der ersten Funkstation 1 und der zweiten Funkstation 2 der Einfluß von Fading auf die Signalübertragung abnimmt.

Es kann auch vorgesehen sein, die Vorentzerrung statt in der Basisstation 1 in den Mobilstationen 2, 3 in entsprechender Weise vorzusehen. Das mehrkanalige Übertragungsverfahren zwischen der Basisstation 1 und den Mobilstationen 2, 3, die im folgenden als Nutzer bezeichnet werden, und bei dem die Übertragungseigenschaften aller Funkkanäle (ISI) und die Codes aller Funkkanäle (MAI) berücksichtigt werden, wird im folgenden durch mathematische Formeln beschrieben. Diese Formeln können entweder durch ein entsprechendes Programm oder entsprechende Hardwarebausteine, die diese Formeln implementieren, realisiert werden.

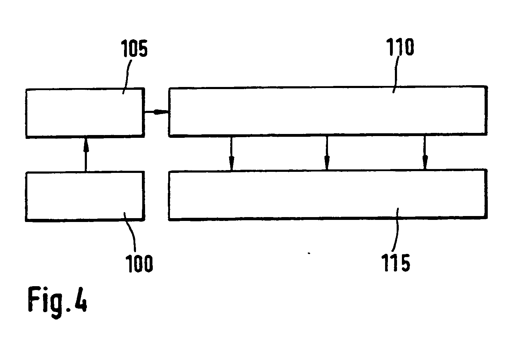

Figur 4 zeigt einen zeitlichen Ablauf bei TDD-Betrieb mit Vorentzerrung. Bei einem ersten Schritt 100 sendet die zweite Funkstation 2 Referenzsignale zur Schätzung der Übertragungseigenschaften der beiden Funkkanäle 20, 25 an die erste Funkstation 1. Diese Kanalschätzung wird bei einem zweiten Schritt 105 nach Empfang der Referenzsignale in der ersten Funkstation 1 durchgeführt. Anschließend findet im ersten Modulator 4 der ersten Funkstation 1 eine Vorentzerrung der an die Funkstation 2 zu übertragenden Signale in einem dritten Schritt 110 statt. Die vorentzerrten Signale werden dann von der zweiten Funkstation 2 in einem vierten Schritt 115 empfangen und brauchen dort nicht mehr entzerrt zu werden.

Als erstes Beispiel soll dabei die zweikanalige Übertragung zwischen der ersten Antenne 50 und der dritten Antenne 60 bzw. der vierten Antenne 65 gemäß Figur 2 beschrieben werden. Dabei soll die zweite Funkstation 2 einen von mehreren Nutzern darstellen.

Es sei ein zeitdiskretes Mehrfachübertragungssystem mit blockweiser Übertragung vorausgesetzt. Sei $\underline{d}^{(k)} = (d^{(k)}_1,...,d^{(k)}_M)$, $k = 1,..., K$ der Vektor der $M$ zu übertragenden Datensymbole eines Datenblocks des $k$-ten Nutzers. $\underline{d} = (\underline{d}^{(1)},...,\underline{d}^{(K)})$ bezeichnet die Zusammenfassung aller zu übertragender Datensymbole. Jedem der $K$ Nutzer sei ein CDMA-Code $\underline{c}^{(k)}=(c^{(k)}_1,...,c^{(k)}_Q)$, $k=1,...,K$, der Länge $Q$ zugeordnet. Durch Spreizung der zu übertragenden Datenbits mit den CDMA-Codes, wird jedes Bit auf $Q$ sogenannte Chips verteilt. Eine Chiptaktperiode beträgt dabei genau

$$\frac{1}{Q}$$

der Bittaktperiode. Mit der Code-Matrix

$$C^{(k)} = \begin{pmatrix} \underline{c}^{(k)T} & 0 & 0 \\ 0 & \ddots & 0 \\ 0 & 0 & \underline{c}^{(k)T} \end{pmatrix} \Big\}_{M \cdot Q}, \ k = 1,\ldots,K$$

$$\underbrace{\qquad\qquad}_{M}$$

$$\underline{c}^{(k)^{T}} = \text{transponierter Vektor } \underline{c}^{(k)}$$

des $k$-ten Nutzers, läßt sich die Spreizung eines Datenblocks des $k$-ten Nutzers schreiben als:

$$C^{(k)} \cdot \underline{d}^{(k)^{T}}$$

Der gesamte Block von $M$ Datenbits wird dabei auf $M \cdot Q$ Chips verteilt. Die Aneinanderreihung der Chiptaktsignale sämtlicher Nutzer ergibt sich zu

$$C \cdot \underline{d}^{T}$$

wobei die Matrix

$$C = \begin{pmatrix} C^{(1)} & 0 & 0 \\ 0 & \ddots & 0 \\ 0 & 0 & C^{(K)} \end{pmatrix}$$

die Code-Matrizen aller Nutzer zusammenfaßt.

Die Signale werden nach der Modulation erfindungsgemäß linear vorentzerrt. In den Figuren 2 und 3 werden die hier mathematisch getrennt behandelten Schritte der Modulation und Vorentzerrung durch den ersten Modulator 4 vorgenommen. Die Vorentzerrung sei durch die Matrix $P$ beschrieben. Es resultiert das Sendesignal $\underline{s}$:

$$\underline{s}^{T} = P \cdot C \cdot \underline{d}^{T}$$

$\underline{s}$ erreicht den $k$-ten Nutzer über die zwei Funkkanäle 20, 25 gemäß dem Ausführungsbeispiel nach Figur 2. Seien durch $\underline{h}^{(k,l)} = (h_1^{(k,l)},\ldots,h_W^{(k,l)})$, $k=1,\ldots,K$, $l=1,2$, die Impulsantworten der beiden Funkkanäle 20, 25 zum $k$-ten Nutzer bezüglich der Chiptaktfrequenz gegeben. $W$ ist die Anzahl der Chiptaktperioden über die ein Mehrwegeempfang berücksichtigt wird. Durch den Mehrwegkanal werden die Datenblöcke der Chiptaktlänge $M \cdot Q$ auf $M \cdot Q + W$-1 Chiptakte ausgedehnt. Die letzen $W$-1 Chipkarte überlagern dabei die ersten $W$-1 Chipkarte des nächsten Datenblocks. Der Demodulator des $k$-ten Nutzers empfängt außer dem Mehrwegesignal je Funkkanal 20, 25 i.a. additives Rauschen $\underline{n}^{(k,l)} = (n^{(k,l)}_1,\ldots,n^{(k,l)}_{M \cdot Q+W-1})$, $k=1,\ldots,K$; $l=1,2$ der Länge $M \cdot Q+W$-1. Mit den Matrizen

$$H^{(k,l)} = \begin{pmatrix} h^{(k,l)}{}_1 & 0 & 0 \\ \vdots & \ddots & 0 \\ h^{(k,l)}{}_W & \vdots & h^{(k,l)}{}_1 \\ 0 & \ddots & \vdots \\ 0 & 0 & h^{(k,l)}{}_W \end{pmatrix} \Big\} M \cdot Q + W - 1$$

$$\underbrace{\phantom{xxxxxxx}}_{M \cdot Q}$$

$$D = \begin{pmatrix} 1 & 0 & 0 & 1 & 0 & 0 & \cdots \\ 0 & \ddots & 0 & 0 & \ddots & 0 & \cdots \\ 0 & 0 & 1 & 0 & 0 & 1 & \cdots \end{pmatrix} \Big\} M \quad Q$$

$$\underbrace{\phantom{xxxxxxxx}}_{M \cdot Q \cdot K}$$

erhält der Demodulator des $k$ - ten Nutzers des Systems also die beiden Empfangssignale

$$\underline{r}^{(k,l)^T} = H^{(k,l)} \cdot D \cdot P \cdot C \cdot \underline{d}^T + \underline{n}^{(k,l)^T}, \; l=1,2, k=1,...,K$$

Hierbei summiert die Matrix $D$ die vorentzerrten Chiptaktsignale aller Nutzer, um sie über eine Antenne abstrahlen zu können.

Die beiden Empfangssignale $\underline{r}^{(k,l)}, l=1,2, k=1,...,K$ werden durch das Summationsglied 80 zunächst linear kombiniert zu

$$\underline{r}^{(k)} = c_1 \, \underline{r}^{(k,1)} + c_2 \, \underline{r}^{(k,2)}$$

Ein geeigneter Demodulator des $k$ - ten Nutzers entsprechend Figur 2 kann als einfaches 'matched filter' ausgebildet sein, welches das empfangene Chiptaktsignal mit den CDMA-Codes des gewünschten Datensignals entspreizt. Dieser 'matched filter'-Empfänger (1-Finger-Rake-Empfänger) zum $k$ - ten Nutzercode $\underline{c}^{(k)}$

$$R^{(k)} = \begin{pmatrix} 0 & 0 & 0 \\ \vdots & \vdots & \vdots \\ 0 & & \\ \underline{c}^{(k)T} & 0 & \\ 0 & \ddots & 0 \\ 0 & 0 & \underline{c}^{(k)T} \end{pmatrix} \Big\} M \cdot Q + W - 1$$

$$\underbrace{\phantom{xxxxxx}}_{M}$$

demoduliert die linear kombinierten Empfangssignale zu

$$\hat{\underline{d}}^{(k)^T} = R^{(k)^H} \cdot \underline{r}^{(k)^T}$$

$$R^{(k)^H} = \text{konjugiert komplexe transponierte Matrix } R^{(k)}$$

Mit den Zusammenfassungen

$$R = \begin{pmatrix} R^{(1)} & 0 & 0 \\ 0 & \ddots & 0 \\ 0 & 0 & R^{(K)} \end{pmatrix}$$

$$H = \begin{pmatrix} c_1 H^{(1,1)} + c_2 H^{(1,2)} & 0 & 0 \\ 0 & \ddots & 0 \\ 0 & 0 & c_1 H^{(K,1)} + c_2 H^{(K,2)} \end{pmatrix}$$

$$\underline{n} = (c_1 \cdot \underline{n}^{(1,1)} + c_2 \cdot \underline{n}^{(1,2)}, \ldots, c_1 \cdot \underline{n}^{(K,1)} + c_2 \cdot \underline{n}^{(K,2)})$$

erhält man als Gesamtvektor aller demodulierter Signale:

$$\hat{\underline{d}} = R^H \cdot H \cdot D^T \cdot D \cdot P \cdot C \cdot \underline{d}^T + R^H \cdot \underline{n}^T$$

Die $M \cdot K \times M \cdot Q \cdot K$ Matrix $R^H \cdot H \cdot D^T \cdot D$ hat i.a. den Rang $M \cdot K$. Daher ist $(R^H \cdot H \cdot D \cdot D) \cdot (R^H \cdot H \cdot D \cdot D)^H$ invertierbar und es existiert

$$P = (R^H \cdot H \cdot D \cdot D)^H \cdot [(R^H \cdot H \cdot D \cdot D) \cdot (R^H \cdot H \cdot D \cdot D)^H]^{-1} \cdot \underline{d} \cdot \frac{1}{\|C \cdot \underline{d}\|^2} \cdot (C \cdot \underline{d})^H$$

Mit dieser Wahl wird

$$\hat{\underline{d}}^T = \underline{d}^T + R^H \cdot \underline{n}^T$$

$R^H$ liefert also die gesendeten Datensymbole $\underline{d}^T$ und additives Rauschen. Trotz Verwendung eines sehr einfachen Empfängers enthält das detektierte Signal weder ISI noch MAI. Diese Störungen werden senderseitig durch Vorentzerrung beseitigt.

H kann einfach durch den ersten Kanalschätzer 11 der ersten Funkstation 1 geschätzt werden.

Ein zur Kanalschätzung in der Uplink-Übertragung gesendetes Referenzsignal $\underline{p}^{(k)}$ des $k$ - ten Nutzers wird über die dritte Antenne 60 in der Form $c_1 \cdot \underline{p}^{(k)}$ und über die vierte Antenne 65 in der Form $c_2 \cdot \underline{p}^{(k)}$ versendet. Die Basisstation 1 empfängt daher das entsprechende Signal

$$H^{(k,1)} \cdot c_1 \cdot \underline{p}^{(k)} + H^{(k,2)} \cdot c_2 \cdot \underline{p}^{(k)} = c_1 \cdot H^{(k,1)} \cdot \underline{p}^{(k)} + c_2 \cdot H^{(k,2)} \cdot \underline{p}^{(k)}$$

und schätzt die Gesamtimpulsantwort beider Funkkanäle 20, 25 des $k$ -ten Nutzers zu

$$\underline{h}^{(k)} = c_1 \cdot \underline{h}^{(k,1)} + c_2 \cdot \underline{h}^{(k,2)}.$$

Als zweites soll das Verfahren zur Signalübertragung zwischen der Basisstation 1 und den Mobilstationen 2, 3 gemäß Figur 3 beschrieben werden, wobei die mehrkanalige Übertragung zwischen der Basisstation 1 und jeder der Mobilstationen 2, 3 über jeweils zwei Funkkanäle 20, 25 erfolgt, wobei zwischen der ersten Antenne 50 und der dritten Antenne 60 sowie zwischen der zweiten Antenne 55 und der dritten Antenne 60 gemäß Figur 3 übertragen wird.

Es sei wiederum ein zeitdiskretes Mehrfachübertragungssystem mit blockweiser Übertragung vorausgesetzt. Sei $\underline{d}^{(k)} = (d^{(k)}_1,...,d^{(k)}_M)$, $k = 1,...,K$ der Vektor der $M$ zu übertragenden Datensymbole eines Datenblocks des $k$-ten Nutzers. $\underline{d} = (\underline{d}^{(1)},...,\underline{d}^{(K)})$ bezeichnet die Zusammenfassung aller zu übertragender Datensymbole. Jedem der $K$ Nutzer sei ein CDMA-Code $\underline{c}^{(k)} = (c^{(k)}_1,...,c^{(k)}_Q)$, $k = 1,...,K$, der Länge $Q$ zugeordnet. Durch Spreizung der zu übertragenden Datenbits mit den CDMA-Codes, wird jedes Bit auf $Q$ sogenannte Chips verteilt. Eine Chiptaktperiode beträgt dabei genau

$$\frac{1}{Q}$$

der Bittaktperiode. Mit der Code-Matrix

$$C^{(k)} = \begin{pmatrix} \underline{c}^{(k)^T} & 0 & 0 \\ 0 & \ddots & 0 \\ 0 & 0 & \underline{c}^{(k)^T} \end{pmatrix} \Biggr\} M \cdot Q, \ k = 1,...,K$$

$$\underbrace{\phantom{xxxxxxxxxx}}_{M}$$

$$\underline{c}^{(k)^T} = \text{transponierter Vektor } \underline{c}^{(k)}$$

des $k$-ten Nutzers, läßt sich die Spreizung eines Datenblocks des $k$-ten Nutzers schreiben als:

$$C^{(k)} \cdot \underline{d}^{(k)^T}$$

Der gesamte Block von $M$ Datenbits wird dabei auf $M \cdot Q$ Chips verteilt. Die Aneinanderreihung der Chiptaktsignale sämtlicher Nutzer ergibt sich zu

$$C \cdot \underline{d}^T$$

wobei die Matrix

$$C = \begin{pmatrix} C^{(1)} & 0 & 0 \\ 0 & \ddots & 0 \\ 0 & 0 & C^{(K)} \end{pmatrix}$$

die Code-Matrizen aller Nutzer zusammenfaßt.

Die Signale werden nach der Modulation erfindungsgemäß linear vorentzerrt. In den Figuren 2 und 3 werden die hier mathematisch getrennt behandelten Schritte der Modulation und Vorentzerrung durch den ersten Modulator 4 vorgenommen. Die Vorentzerrung sei durch die Matrix $P$ beschrieben.

Die resultierenden Sendesignale $\underline{s}^{(l)}$, $l=1,2$ der ersten Antenne 50 und der zweiten Antenne 55 seien in einem Gesamtsignalvektor $\underline{s} = (\underline{s}^{(1)}, \underline{s}^{(2)})$ zusammengefaßt mit:

$$\underline{s}^T = P.C.\underline{d}^T$$

Der Gesamtsignalvektor $\underline{s}$ erreicht den $k$-ten Nutzer über die zwei Funkkanäle 20, 25 gemäß dem Ausführungsbeispiel nach Figur 3. Seien durch

$$\underline{h}^{(k,l)} = (h_1^{(k,l)},...,h_W^{(k,l)}),\ k=1,...,K,l=1,2$$

die Impulsantworten der beiden Funkkanäle 20, 25 zum $k$-ten Nutzer bezüglich der Chiptaktfrequenz gegeben. $W$ ist die Anzahl der Chiptaktperioden über die ein Mehrwegeempfang berücksichtigt wird. Durch den Mehrwegkanal werden die Datenblöcke der Chiptaktlänge $M \cdot Q$ auf $M \cdot Q + W$-1 Chiptakte ausgedehnt. Die letzen $W$-1 Chipkarte überlagern dabei die ersten $W$-1 Chipkarte des nächsten Datenblocks. Der Demodulator des $k$-ten Nutzers empfängt außer dem Mehrwegesignal je Funkkanal 20, 25 i.a. das additive Rauschen

$\underline{n}^{(k,l)}=(n^{(k,l)}_1,...,n^{(k,l)}_{M\,Q+W\text{-}1}),\ k=1,...,K,\ l=1,2$ der Länge $M{\cdot}Q + W$-1. Mit den Matrizen

$$H^{(k,l)'} = \begin{pmatrix} h^{(k,l)}_1 & 0 & 0 \\ \vdots & \ddots & 0 \\ h^{(k,l)}_W & \vdots & h^{(k,l)}_1 \\ 0 & \ddots & \vdots \\ 0 & 0 & h^{(k,l)}_W \end{pmatrix} \left.\rule{0pt}{60pt}\right\} M\cdot Q + W - 1$$

$$\underbrace{\phantom{xxxxxxxxx}}_{M\cdot Q}$$

$$D = \begin{pmatrix} D_0 & 0 \\ 0 & D_0 \end{pmatrix} \left.\rule{0pt}{30pt}\right\} 2\cdot M \cdot Q$$

$$\underbrace{\phantom{xxxxxxx}}_{2\,M{\cdot}Q{\cdot}K}$$

$$D_0 = \begin{pmatrix} 1 & 0 & 0 & 1 & 0 & 0 & \cdots \\ 0 & \ddots & 0 & 0 & \ddots & 0 & \cdots \\ 0 & 0 & 1 & 0 & 0 & 1 & \cdots \end{pmatrix} \left.\rule{0pt}{30pt}\right\} M \cdot Q$$

$$\underbrace{\phantom{xxxxxxxxxx}}_{M{\cdot}Q\,K}$$

erhält der Demodulator des $k$-ten Nutzers des Systems das Signal

$$\underline{r}^{(k)T} = (H^{(k,1)},H^{(k,2)})\cdot D\cdot P\cdot C\cdot\underline{d}^T + \underline{n}^{(k,1)T} + \underline{n}^{(k,2)T}$$

Ein geeigneter Demodulator des $k$-ten Nutzers entsprechend Figur 3 kann als einfaches 'matched filter' ausgebildet sein, welches das empfangene Chiptaktkanal mit den CDMA-Codes des gewünschten Datensignals entspreizt. Dieser 'matched filter'-Empfänger (1-Finger-Rake-Empfänger) zum $k$-ten Nutzercode $\underline{c}^{(k)}$

$$R^{(k)} = \left.\begin{pmatrix} 0 & 0 & 0 \\ \vdots & \vdots & \vdots \\ 0 & & \\ \underline{c}^{(k)^T} & 0 & \\ 0 & \ddots & 0 \\ 0 & 0 & \underline{c}^{(k)^T} \end{pmatrix}\right\} M \cdot Q + W - 1$$

$$\underbrace{\qquad\qquad}_{M}$$

demoduliert das Empfangssignal zu

$$\overset{\wedge}{\underline{d}}^{(k)^T} = R^{(k)^H} \cdot \underline{r}^{(k)^T}$$

$$R^{(k)^H} = \text{konjugiert komplexe transponierte Matrix } R^{(k)}$$

Mit den Zusammenfassungen

$$R = \begin{pmatrix} R^{(1)} & 0 & 0 \\ 0 & \ddots & 0 \\ 0 & 0 & R^{(K)} \end{pmatrix}$$

$$H = \begin{pmatrix} H^{(1,1)} & 0 & 0 & H^{(1,2)} & 0 & 0 \\ 0 & \ddots & 0 & 0 & \ddots & 0 \\ 0 & 0 & H^{(K,1)} & 0 & 0 & H^{(K,2)} \end{pmatrix}$$

$$\underline{n} = (\underline{n}^{(1,1)} + \underline{n}^{(1,2)}, ..., \underline{n}^{(K,1)} + \underline{n}^{(K,2)}$$

erhält man als Gesamtvektor aller demodulierter Signale

$$\overset{\wedge}{\underline{d}} = R^H \cdot H \cdot D^T \cdot D \cdot P \cdot C \cdot \underline{d}^T + R^H \cdot \underline{n}^T$$

Die $M \cdot K \times 2 \cdot M \cdot Q \cdot K$-Matrix $R^H \cdot H \cdot D^T \cdot D$ hat i.a den Rang $M \cdot K$.

Daher ist $(R^H \cdot H \cdot D \cdot D) \cdot (R^H \cdot H \cdot D \cdot D)^H$ invertierbar und es existiert

$$P = (R^H \cdot H \cdot D^T \cdot D)^H \cdot [(R \cdot {}^H \cdot H \cdot D^T \cdot D) \cdot (R^H \cdot H \cdot D^T \cdot D)^H]^{-1} \cdot \underline{d}^T \cdot \frac{1}{\|C \cdot \underline{d}^T\|^2} \cdot (C \cdot \underline{d}^T)^H$$

Mit dieser Wahl wird

$$\hat{\underline{d}}^T = \underline{d}^T + R^H \cdot \underline{n}^T$$

$R^H$ liefert also die gesendeten Datensymbole $\underline{d}^T$ und additives Rauschen. Trotz Verwendung eines sehr einfachen Empfängers enthält das detektierte Signal weder ISI noch MAI. Diese Störungen werden senderseitig durch Vorentzerrung beseitigt.

$H$ kann einfach durch die beiden Kanalschätzer 11, 12 der ersten Funkstation 1 geschätzt werden.

## Patentansprüche

1. Verfahren für die Übertragung von Signalen zwischen einer ersten Funkstation (1) und einer zweiten Funkstation (2), wobei in einem Modulator (4) der ersten Funkstation (1) eine Vorentzerrung der zu übertragenden Signale vorgenommen wird und wobei die vorentzerrten Signale über mehrere Funkkanäle (20, 25) von der ersten Funkstation (1) an die zweite Funkstation (2) übertragen werden, **dadurch gekennzeichnet, dass** zwischen der ersten Funkstation (1) oder der zweiten Funkstation (2) und weiteren Funkstationen (3) über weitere Funkkanäle Signale übertragen werden, wobei die mit den Signalen übertragenen Daten unterschiedlicher Funkstationen mit unterschiedlichen Codes gespreizt werden, und dass die Vorentzerrung im Modulator (4) der ersten Funkstation (1) in Abhängigkeit aller unterschiedlicher Codes und der Übertragungseigenschaften aller Funkkanäle vorgenommen wird.

2. Verfahren nach Anspruch 1, **dadurch gekennzeichnet, dass** von mehreren Antennen (50, 55) der ersten Funkstation (1) jeweils ein vorentzerrtes Signal abgestrahlt und über je einen Funkkanal (20, 25) an die zweite Funkstation (2) übertragen wird, wobei für jeden Funkkanal (20, 25) eine Schätzung einer Impulsantwort in der ersten Funkstation (1) ermittelt wird und wobei eine Vorentzerrung des von der jeweiligen Antenne (50, 55) abzustrahlenden Signals in Abhängigkeit der Schätzung der Impulsantworten der Funkkanäle (20, 25) vorgenommen wird.

3. Verfahren nach Anspruch 2, **dadurch gekennzeichnet, dass** von einer Antenne (60) der zweiten Funkstation (2) ein Referenzsignal über die Funkkanäle (20, 25) an die erste Funkstation (1) übertragen wird und dass die Schätzung der Impulsantwort des jeweiligen Funkkanals (20, 25) aus einem Empfang des Referenzsignals über den jeweiligen Funkkanal (20, 25) in der ersten Funkstation (1) abgeleitet wird.

4. Verfahren nach einem der vorherigen Ansprüche, **dadurch gekennzeichnet, dass** von mehreren Antennen (60, 65) der zweiten Funkstation (2) ein von der ersten Funkstation (1) abgestrahltes vorentzerrtes Signal über je einen Funkkanal (20, 25) empfangen wird, wobei in der ersten Funkstation (1) eine Schätzung einer Gesamtimpulsantwort aller Funkkanäle (20, 25) ermittelt wird und wobei eine Vorentzerrung des von der ersten Funkstation (1) abzustrahlenden Signals in Abhängigkeit der Schätzung der Gesamtimpulsantwort vorgenommen wird, und dass die von den Antennen (60, 65) der zweiten Funkstation (2) gebildeten Empfangssignale linear kombiniert und anschließend einer Demodulation zugeführt werden.

5. Verfahren nach Anspruch 4, **dadurch gekennzeichnet, dass** von den Antennen (60, 65) der zweiten Funkstation (2) jeweils ein Referenzsignal über den zugehörigen Funkkanal (20, 25) an die erste Funkstation (1) übertragen wird und dass die Schätzung der Gesamtimpulsantwort aus einem überlagerten Empfang der Referenzsignale in der ersten Funkstation (1) abgeleitet wird.

6. Verfahren nach Anspruch 5, **dadurch gekennzeichnet, dass** jedes Referenzsignal in Abhängigkeit des für seine Übertragung verwendeten Funkkanals (20, 25) mit einem Koeffizienten multipliziert wird und dass bei der linearen Kombination der von den Antennen (60, 65) der zweiten Funkstation (2) empfangenen Signale jedes empfangene Signal mit dem Koeffizienten des für seine Übertragung verwendeten Funkkanals (20, 25) multipliziert wird.

7. Verfahren nach einem der vorherigen Ansprüche, **dadurch gekennzeichnet, dass** die Übertragungseigenschaften der Funkkanäle aus Datenübertragungen der zweiten Funkstation (2) und der weiteren Funkstationen (3) an die erste Funkstation (1) ermittelt werden.

8. Funkstation (1) mit einem Modulator (4), wobei im Modulator (4) eine Vorentzerrung von zu übertragenden Signalen erfolgt und wobei mindestens zwei Antennen (50, 55) vorgesehen sind, von denen eine Abstrahlung der vorentzerrten Signale über jeweils einen Funkkanal (20, 25) zu einer weiteren Funkstation (2) erfolgt, **dadurch gekennzeichnet, dass** ein Codegenerator (5) vorgesehen ist, der die mit den Signalen übertragenen Daten mit einem Code spreizt, wobei der Codegenerator (5) den Code in Abhängigkeit einer gewählten Funkverbindung ermittelt, und dass die Vorentzerrung des von der jeweiligen Antenne (50, 55) abzustrahlenden Signals in Abhängigkeit aller aktuell verwendeten Codes und der Übertragungseigenschaften aller aktuell verwendeten Funkkanäle erfolgt.

9. Funkstation (1) nach Anspruch 8, **dadurch gekennzeichnet, dass** mindestens ein Kanalschätzer (11, 12) vorgesehen ist, der für jeden Funkkanal (20, 25) eine Schätzung seiner Impulsantwort ermittelt und dass die Vorentzerrung des von der jeweiligen Antenne (50, 55) abzustrahlenden Signals in Abhängigkeit der Schätzungen der Funkkanäle (20, 25) erfolgt.

**Claims**

1. Method for transmitting signals between a first radio station (1) and a second radio station (2), a preequalization of the signals to be transmitted being undertaken in a modulator (4) of the first radio station (1), and the preequalized signals being transmitted from the first radio station (1) to the second radio station (2) via a plurality of radio channels (20, 25), **characterized in that** signals are transmitted via further radio channels between the first radio station (1) or the second radio station (2) and further radio stations (3), the data, transmitted with the aid of the signals, of different radio stations being spread with the aid of different codes, and **in that** the preequalization is undertaken in the modulator (4) of the first radio station (1) as a function of all the different codes and of the transmission properties of all the radio channels.

2. Method according to Claim 1, **characterized in that** a preequalized signal is emitted in each case by a plurality of antennas (50, 55) of the first radio station (1) and is transmitted to the second radio station (2) via one radio channel (20, 25) each, an estimate of a pulse response being determined in the first radio station (1) for each radio channel (20, 25) and a preequalization of the signal to be emitted by the respective antenna (50, 55) being undertaken as a function of the estimate of the pulse responses of the radio channels (20, 25).

3. Method according to Claim 2, **characterized in that** a reference signal is transmitted from an antenna (60) at the second radio station (2) to the first radio station (1) via the radio channels (20, 25), and **in that** the estimate of the pulse response of the respective radio channel (20, 25) is derived from a reception of the reference signal in the first radio station (1) via the respective radio channel (20, 25).

4. Method according to one of the preceding claims, **characterized in that** a preequalized signal emitted from the first radio station (1) is received by a plurality of antennas (60, 65) at the second radio station (2) via in each case one radio channel (20, 25), an estimate of a total pulse response of all the radio channels (20, 25) being determined in the first radio station (1), and a preequalization of the signal being emitted from the first radio station (1) being undertaken as a function of the estimate of the total pulse response, and **in that** the received signals formed by the antennas (60, 65) at the second radio station (2) are linearly combined and subsequently fed to a demodulation.

5. Method according to Claim 4, **characterized in that** a reference signal is respectively transmitted from the antennas (60, 65) at the second radio station (2) to the first radio station (1) via the associated radio channel (20, 25), and **in that** the estimate of the total pulse response is derived from a superimposed reception of the reference signals in the first radio station (1).

6. Method according to Claim 5, **characterized in that** each reference signal is multiplied by a coefficient as function of the radio channel (20, 25) used for its transmission, and **in that** given a linear combination of the signals received by the antennas (60, 65) of the second radio station (2) each received signal is multiplied by the coefficient of the radio channel (20, 25) used for its transmission.

7. Method according to one of the preceding claims, **characterized in that** the transmission properties of the radio channels are determined from data transmissions of the second radio station (2) and the further radio stations (3) to the first radio station (1).

8. Radio station (1) having a modulator (4), a preequalization of signals to be transmitted being performed in the modulator (4), and at least two antennas (50, 55) being provided from which the preequalized signals are transmitted to a further radio station (2) via a radio channel (20, 25) in each case, **characterized in that** a code generator (5) is provided which uses a code to spread the data transmitted with the aid of the signals, the code generator (5) determining the code as a function of a selected radio link, and **in that** the preequalization of the signal to be emitted by the respective antenna (50, 55) is performed as a function of all the currently used codes and the transmission properties of all the currently used radio channels.

9. Radio station (1) according to Claim 8, **characterized in that** at least one channel estimator (11, 12) is provided which determines for each radio channel (20, 25) an estimate of its pulse response, and **in that** the preequalization of the signal to be emitted by the respective antenna (50, 55) is performed as a function of the estimates of the radio channels (20, 25).

**Revendications**

1. Procédé de transmission de signaux entre une première station radio (1) et une seconde station radio (2), selon lequel dans la première station radio, un modulateur (4) effectue une pré-correction des signaux à transmettre et les signaux ainsi corrigés de manière préalable sont transmis par plusieurs canaux radio (20, 25) de la première station radio (1) à la seconde station radio (2),
   **caractérisé en ce qu'**
   entre la première station radio (1) ou la seconde station radio (2) et d'autres stations radio (3), on transmet des signaux par des canaux radio, les données transmises par les signaux provenant de stations radio différentes étant étalées avec des codes différents, et la correction préalable dans le modulateur (4) de la première station radio (1) se fait en fonction de codes différents et prenant en compte les caractéristiques de transmission de tous les canaux radio.

2. Procédé selon la revendication 1,
   **caractérisé en ce que**
   plusieurs antennes (50, 55) de la première station radio (1) émettent chaque fois un signal corrigé préalablement et est transmis par un canal radio respectif (20, 25) à la seconde station radio (2), et pour chaque canal radio (20, 25) on évalue une réponse impulsionnelle dans la première station radio (1) et on effectue une correction préalable du signal émis par l'antenne respective (50, 55) en fonction de l'évaluation des réponses impulsionnelles des canaux radio (20, 25).

3. Procédé selon la revendication 2,
   **caractérisé en ce qu'**
   une antenne (60) de la seconde station radio (2) transmet un signal de référence par les canaux radio (20, 25) à la première station radio (1) et l'évaluation de la réponse impulsionnelle du canal radio respectif (20, 25) se déduit de la réception du signal de référence par le canal radio respectif (20, 25) dans la première station radio (1).

4. Procédé selon l'une des revendications précédentes,
   **caractérisé en ce que**
   plusieurs antennes (60, 65) de la seconde station radio (2) reçoivent un signal corrigé préalablement, émis par la première station radio (1), par l'intermédiaire d'un canal radio respectif (20, 25), en évaluant dans la première station radio (1) une réponse impulsionnelle globale de tous les canaux radio (20, 25), et en effectuant une correction préalable du signal émis par la première station radio (1) et en fonction de l'évaluation de la réponse impulsionnelle globale, et
   on combine de manière linéaire les signaux de réception formés par les antennes (60, 65) de la seconde station radio (2) et ensuite on effectue une démodulation.

5. Procédé selon la revendication 4,
   **caractérisé en ce que**
   les antennes (60, 65) de la seconde station radio (2) transmettent respectivement un signal de référence par le canal radio correspondant (20, 25) à la première station radio (1), et
   on déduit l'évaluation de la réception impulsionnelle globale à partir d'une réception combinée des signaux de référence dans la première station radio (1).

6. Procédé selon la revendication 5,
   **caractérisé en ce qu'**
   on multiplie chaque signal de référence en fonction du canal radio (20, 25) utilisé pour sa transmission avec un coefficient et dans la combinaison linéaire des signaux reçus par les antennes (60, 65) de la seconde station radio (2), on multiplie avec les coefficients du canal radio (20, 25) utilisés pour sa transmission.

**7.** Procédé selon l'une des revendications précédentes,
**caractérisé en ce qu'**
on détermine les caractéristiques de transmission des canaux radio à partir des transmissions de données de la seconde station radio (2) et des autres stations radio (3) vers la première station radio (1).

**8.** Station radio (1) comprenant un modulateur (4) qui effectue une correction préalable des signaux à transmettre, et au moins deux antennes (50, 55) dont l'une assure l'émission des signaux corrigés préalablement par chaque fois un canal radio (20, 25) vers une autre station radio (2),
**caractérisée en ce qu'**
un générateur de code (5) qui traite les signaux des données transmises avec un code, le générateur de code (5) déterminant le code en fonction de la liaison radio choisie, et
la correction préalable des signaux à émettre par l'antenne respective (50, 55) se fait en fonction de tous les codes utilisés actuellement et les caractéristiques de transmission de tous les canaux radio utilisés actuellement.

**9.** Station radio (1) selon la revendication 8,
**caractérisée par**
au moins un évaluateur de canal (11, 12) qui fait une évaluation de sa réponse impulsionnelle pour chaque canal radio (20, 25), et la correction préalable du signal à émettre par chaque antenne (50, 55) se fait en fonction des évaluations des canaux radio (20, 25).

**Fig.1**

Fig.2

Fig.3

EP 1 320 200 B1

**Fig.4**